# EUROPEAN PATENT APPLICATION

(11) **EP 4 318 052 A2**
(43) Date of publication of application: **07.02.2024**
(21) Application number: 23185384.7
(22) Date of filing: 13.07.2023
(51) Int. Cl.: G02B 3/12, G02B 27/01

(54) **LOW BIREFRINGENCE FLUID LENS**

(30) Priority: 04.08.2022 US 202263395228 P; 04.05.2023 US 202318312204
(71) Applicant: Meta Platforms Technologies, LLC, Menlo Park, CA 94025 (US)
(72) Inventor: OUDERKIRK, Andrew John, Menlo Park, 94025 (US); JENKINS, Kurt, Menlo Park, 94025 (US); YE, Sheng, Menlo Park, 94025 (US); DIAZ, Liliana Ruiz, Menlo Park, 94025 (US); COOKE, John, Menlo Park, 94025 (US); GENG, Ying, Menlo Park, 94025 (US); SILVERSTEIN, Barry David, Menlo Park, 94025 (US)
(74) Representative: Murgitroyd & Company

(57) **Abstract**

The disclosed apparatus (100) includes a first rigid lens (110); a second rigid lens (120), a seal (130) that couples the first rigid lens (110) and the second rigid lens (120) together, where the first rigid lens (110), the second rigid lens (120), and the seal (130) define a cavity; and a fluid (140) within the cavity, where the seal (130) is adapted to admit expansions of the fluid (140) within the cavity. Various other apparatuses and methods are also disclosed.

## Description

### TECHNICAL FIELD

The subject matter of the present disclosure relates generally to fluid lenses and finds particular, although not exclusive, utility in providing a fluid lens with low birefringence for use with a display system.

### BACKGROUND

A pancake lens assembly may be used to direct and/or enhance images from a display-e.g., for an artificial reality system (such as virtual reality, augmented reality, etc.). Pancake lens assemblies may manage the polarization state of light emitted by a display through a series of a partially reflective layer and a reflective polarizer. An optical element, such as a lens, may be situated between the partially reflective layer and the reflective polarizer. However, birefringence in the lens may result in reduced contrast in the display system. For example, temperature changes may induce strain in some components of a pancake lens assembly, potentially resulting in altered and/or degraded optical properties of the pancake lens. For example, strain may result in strain-induced birefringence which way, in turn, reduce the contrast ratio of the pancake lens (and/or cause image ghosting).

### SUMMARY

According to a first aspect, there is provided an apparatus comprising: a first rigid lens; a second rigid lens; a seal that couples the first rigid lens and the second rigid lens together, wherein the first rigid lens, the second rigid lens, and the seal define a cavity; and a fluid within the cavity, wherein the seal is adapted to admit expansion of the fluid within the cavity.

The seal may comprise a same material of at least one of: the first rigid lens; or the second rigid lens.

The seal may have a higher coefficient of thermal expansion than at least one of: the first rigid lens; or the second rigid lens.

The seal may comprise an elastic material.

The apparatus may further comprise a reservoir. The seal may be adapted to allow fluid to pass through at least a portion of the seal to the reservoir.

The seal may comprise two layers. The two layers may differ from each other in material composition. The seal may curve away from a common plane defined by the first lens and the second lens. Alternatively, the seal may curve inward toward a common plane defined by the first lens and the second lens.

The apparatus may further comprise: a reflective polarizer; and a partial reflector. The reflective polarizer may be adjacent to at least one of the first lens and the second lens. The partial reflector may be adjacent to at least one of the first lens and the second lens. The reflective polarizer may be between the first lens and the fluid. Alternatively, the partial reflector may be between the second lens and the fluid. The first lens may have a diameter of greater than about 25 millimeters; and may have an average thickness of less than about 2 millimeters. The reflective polarizer may comprise a multilayer reflective polarizer. The reflective polarizer may have a thickness of less than about 50 microns.

According to a second aspect, there is provided an apparatus comprising: a pancake lens with a folded optical path; wherein the pancake lens maintains a contrast ratio of at least 200:1 when undergoing a temperature change of about 70 degrees centigrade over about 5 minutes.

The pancake lens may maintain a contrast ratio of at least 500:1 when undergoing a temperature change of about 70 degrees over about 5 minutes.

According to a third aspect, there is provided a method of manufacture comprising: bonding, to a surface of a first lens, a multilayered reflective polarizer; coupling a second lens to the first lens with a sealing component to form a cavity with the first lens, the second lens, and the sealing component; and filling the cavity with a fluid.

### BRIEF DESCRIPTION OF THE DRAWINGS

The accompanying drawings illustrate a number of exemplary embodiments and are a part of the specification. Together with the following description, these drawings demonstrate and explain various principles of the present disclosure.
FIG. 1 is an illustration of an example liquid lens.
FIG. 2 is an illustration of an example display system with a liquid lens.
FIG. 3 is an illustration of a liquid lens accommodating fluid expansion and/or contraction.
FIG. 4 is an illustration of a liquid lens with a bilayered seal with an outward curvature.
FIG. 5 is an illustration of a liquid lens with a bilayered seal with an inward curvature.
FIG. 6 is a flow diagram of an example method of manufacturing a liquid lens.
FIG. 7 is an illustration of example augmented-reality glasses that may be used in connection with embodiments of this disclosure.
FIG. 8 is an illustration of an example virtual-reality headset that may be used in connection with embodiments of this disclosure.

Throughout the drawings, identical reference characters and descriptions indicate similar, but not necessarily identical, elements. While the exemplary embodiments described herein are susceptible to various modifications and alternative forms, specific embodiments have been shown by way of example in the drawings and will be described in detail herein. However, the exemplary embodiments described herein are not intended to be limited to the particular forms disclosed. Rather, the present disclosure covers all modifications, equivalents, and alternatives falling within the scope of the appended claims.

### DETAILED DESCRIPTION

Apparatuses described herein may provide a lightweight, compact pancake lens assembly with minimal birefringence, even under temperature changes. For example, these apparatuses may include one or more reservoirs to accommodate expanding fluid within the fluid lens, avoid stress on components of the pancake lens assembly that may otherwise be caused by the expanding fluid.

Users may be sensitive to contrast ratios up to 500:1, up to 1000:1, up to 2000:1, or beyond. Accordingly, in some examples, one or more of the liquid lenses described herein may have contrast ratios of at least 500:1, of at least 1000:1, or of at least 2000:1. In addition, in some examples, one or more of the liquid lenses described herein may maintain high contrast ratios even under varying conditions. For examples, one or more of the liquid lenses described herein may maintain a contrast ratio of at least 200:1, of at least 500:1, of at least 1000:1 or of at least 2000:1 during and/or immediately following a change in temperature (e.g., of an environment in which the user is operating a display system that includes the lens, of the display system, of the lens, and/or of fluid in the lens). Examples of such temperature changes include, without limitation, changes of temperature by at least 30 degrees centigrade, by at least 40 degrees centigrade, by at least 50 degrees centigrade, by at least 60 degrees centigrade, by at least 70 degrees centigrade, by at least 80 degrees centigrade, and by at least 90 degrees centigrade. In some examples, liquid lenses described herein may maintain one or more of the contrast ratios listed above under the condition of one or more of the temperature changes listed above where the temperature change happens over a relatively short period of time. Examples of time windows within which one or more of the temperature changes listed above may occur include, without limitation, one hour or less, 40 minutes or less, 30 minutes or less, 20 minutes or less, 10 minutes or less, 5 minutes or less, or 3 minutes or less.

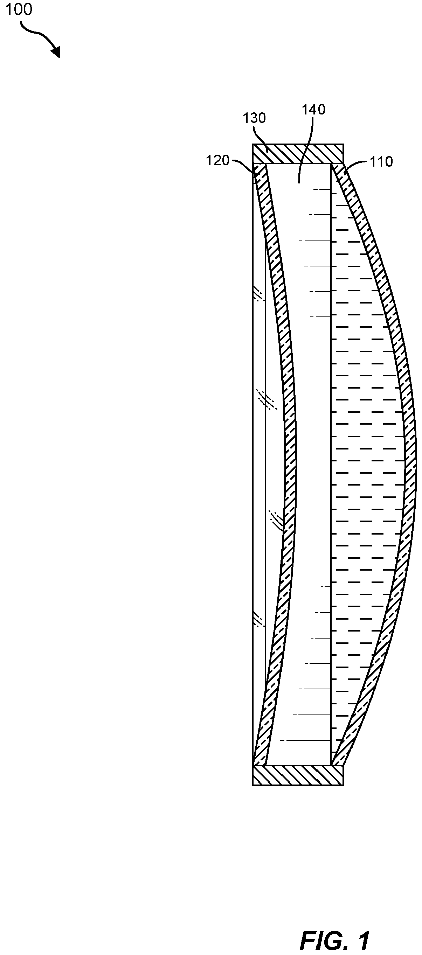

FIG. 1 is an illustration of an example liquid lens 100. As shown in FIG. 1, lens 100 may include a lens 110 bonded to a lens 120 with a seal 130. A fluid 140 may fill the space between lenses 110 and 120. Lenses 110 and 120 may be made of any suitable material. For example, lens 110 and/or lens 120 may be made of glass (e.g., an optical borosilicate-crown glass, such as SCHOTT N-BK7), plastic (e.g., polycarbonate, polymethylmethacrylate, cyclic olefin copolymer, etc.). In some examples, lens 110 and/or lens 120 may have low birefringence.

Fluid 140 may fill the space between lenses 110 and 120. In some examples, fluid 140 may be partially or completely contained between lenses 110 and 120 by seal 130. In some examples, fluid 140 may include a liquid. Examples of such a liquid may include, without limitation, a silicone (e.g., low molecular weight polydimethylsiloxane), glycerol, water, and/or an oligomer (e.g., a dimer, trimer, etc., of phenyl thio ether). In some examples, the liquid may also include one or more solvents and one or more solutes (e.g., the liquid may include a solvent mixture that suppresses the freezing point of the liquid). Examples of solutes for inclusion in the liquid include, without limitation, organic solutes, inorganic solutes, organometallic solutes, and/or any mixture thereof. In some examples, the liquid may include, as a solute, one or more salts, such as salts based on titanium, barium, lanthanum, etc. In some examples, Examples of such solvents include, without limitation, water, glycol, low molecular weight polydimethylsiloxane, and oligomeric polyphenyl thio ethers. In some examples, fluid 140 may be crosslinked to form a gel and/or may contain solutes such as crosslinked polymers. Crosslinks may be, e.g., covalent, ionic, hydrogen-bonded, or crystallites. Examples of suitable materials may include, without limitation, glycerol, water, starch, dimethylsulfoxide, the like, and combinations thereof.

Seal 130 may be adapted to perform any of a number of functions. For example, seal 130 may be adapted to contain fluid 140. As another example, seal 130 may be adapted to define the geometry of separation between lenses 110 and 120. In addition, in some examples, and as will be discussed in greater detail below, seal 130 may be adapted to accommodate the coefficient of thermal expansion of fluid 140 (which may, e.g., be greater than the coefficient of thermal expansion of lenses 110 and/or 120). Seal 130 may accommodate the expansion of fluid 140 in any of a variety of ways. In some examples, seal 130 may include, be adjacent to, and/or connect to a reservoir that holds a portion of fluid 140 when fluid 140 expands. Additionally or alternatively, seal 130 may have a high coefficient of thermal expansion (e.g., a coefficient of thermal expansion sufficient to accommodate a portion of fluid 140 when fluid 140 expands, such that the pressure of fluid 140 remains approximately constant (e.g., within 1%, within 2%, within 5%, within 10%, within 20%) as the temperature of seal 130 and fluid 140 increases or decreases). Examples of materials of which seal 130 may be composed include, without limitation, neoprene, one or more silicones, and/or one or more other elastomers or other materials with a predetermined coefficient of thermal expansion.

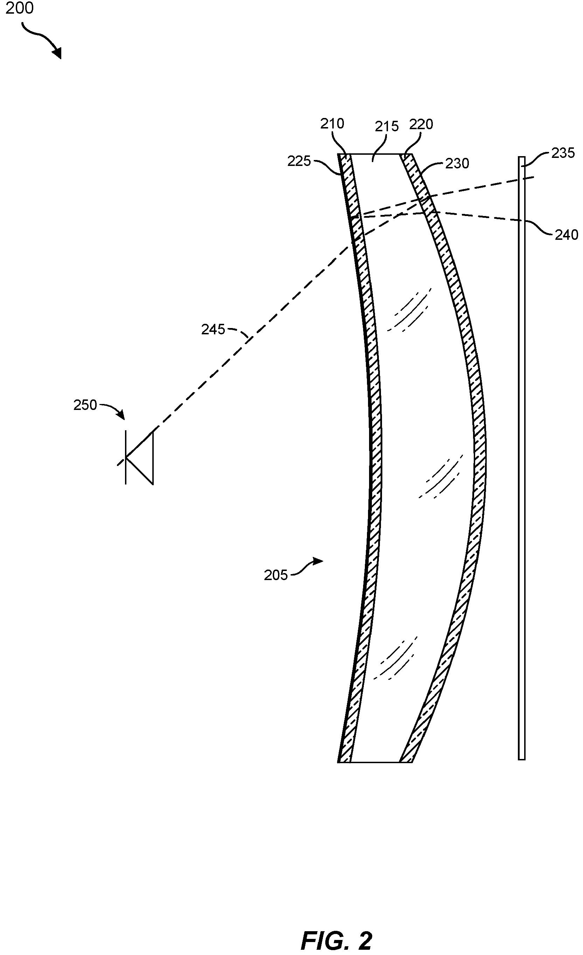

FIG. 2 is an illustration of an example display system 200 with a liquid lens 205 and a display 235. In some examples, liquid lens 205 may be liquid lens 100 of FIG. 1. As shown in FIG. 2, liquid lens 205 may include a lens 210 and a lens 220. Lenses 210 and 220 may (e.g., along with a connecting seal (not pictured)) encase a fluid 215. In one example, a reflective polarizer 225 may be adjacent to a surface of lens 210 (e.g., may be bonded to a surface of lens 210). In addition, a partial reflector 230 may be adjacent to a surface of lens 220 (e.g., may be bonded to a surface of lens 220). While reflective polarizer 225 is depicted in FIG. 2 as adjacent to the air-facing side of lens 210, in some examples reflective polarizer 225 may be adjacent (e.g., bonded) to the fluid-facing side of lens 210. Similarly, while partial reflector 230 is depicted in FIG. 2 as adjacent to the air-facing side of lens 220, in some examples partial reflector 230 may be adjacent (e.g., bonded) to the fluid-facing side of lens 220.

By way of illustration, display 235 may emit a beam 240 of spatially modulated light. For example, beam 240 may be circularly polarized. A portion of beam 240 (e.g., approximately half) may be transmitted by partial reflector 230. The transmitted portion of beam 240 may be reflected by reflective polarizer 225 and then partially reflected by partial reflector 230. The reflected portion of beam 240 may then be transmitted by reflective polarizer 225, forming a beam 245, which may illuminate an eye box 250.

As may be appreciated from the description provided herein, lens 205 may transmit light from display 235 to eye box 250 along a folded optical path, potentially allowing for a compact and/or lightweight design.

As used herein, the term "reflective polarizer" may refer to any optical element that reflects one handedness of circularly polarized light and transmits the opposite handedness. Examples of reflective polarizers include, without limitation, cholesteric reflective polarizers and linear reflective polarizers. For example, a reflective polarizer may include a multilayer birefringent reflective polarizer and/or a wire grid reflective polarizer. A linear reflective polarizer may be combined with a quarter wave retarder to allow the combination to reflect or transmit circularly polarized light. Thus, examples described herein that include a linear reflective polarizer may also include a quarter wave retarder that is, e.g., attached, adjacent to, and/or in the path of the light being reflected or transmitted by the linear reflective polarizer.

As used herein, the term "partial reflector" may refer to any optical element (e.g., a material) that reflects a portion of light (e.g., approximately half) and transmits a remaining portion of light (e.g., approximately half). Examples of materials that may serve as a partial reflector include, without limitation, thin metal coatings (e.g., thin aluminum), multilayer dielectric coatings, and combinations thereof.

As used herein, the term "fluid" may refer to any liquid, gel, or gas. In examples herein where a fluid is a gel, the gel may have any of a variety of ranges of viscosity. Examples of ranges of the gel viscosity include, without limitation, between 0.000005 to 2 GPa·s (gigapascal-seconds), 0.000005 to 1 GPa·s, 0.000005 to 0.1 GPa.s, 0.000005 to 0.01 GPa·s, and 0.000005 to 0.001 GPa·s. The fluid may also have any of a variety of ranges of elasticity. Examples of ranges of the fluid elasticity include, without limitation, about 1.5 to 2.5 GPa (gigapascals), about 1.0 to 2.5 GPa, about 0.5 to 2.5 GPa, about 0.3 to 2.5 GPa, about 0.2 to 2.5 GPa, about 0.1 to 2.5 GPa, about 0.05 to 2.5 GPa, about 0.025 to 2.5 GPa.

In some examples, one or more of the fluids described herein may be optically transparent. A material that is "transparent" or "optically transparent" may, in some examples, be characterized by a transmissivity within the visible spectrum of at least approximately 90% (e.g., approximately 90%, approximately 95%, approximately 96%, approximately 97%, approximately 98%, approximately 99%, approximately 99.5%, or approximately 99.9%, including ranges between any of the foregoing values) and less than approximately 10% bulk haze.

In some examples, one or more of the fluids described herein may exhibit stable characteristics (e.g., transparency, viscosity, volume, etc.) over typical operating conditions, including pressures associated with temperatures ranging from approximately -10°C to approximately 60°C. As used herein, a characteristic that is "stable" may, in certain examples, exhibit a variation of at most 10% (e.g., 1%, 2%, 5%, or 10%, including ranges between any of the foregoing values) over a range of operating conditions, including temperature, etc. In some examples, a lens fluid may behave as a Newtonian fluid.

Examples of fluids that may be used in one or more of the liquid lenses described herein include, a polyphenyl thioether-based lens fluid. Example lens fluids may include a mixture of polyphenyl thioethers and polyphenyl ethers. In further embodiments, a liquid lens may include a polyphenyl thioether-based lens fluid where the lens fluid is substantially free of any polyphenyl ether-based content. That is, example lens fluids may consist essentially of one or more polyphenyl thioether molecules or, in some embodiments, consist of one or more polyphenyl thioether molecules.

The lens fluids disclosed herein may include linear, branched, or star-shaped polyphenyl thioether molecules having from 2 to 7 aromatic rings per molecule, e.g., 2, 3, 4, 5, 6 or 7 aromatic rings. In some aspects, example polyphenyl thioether molecules may be represented by the formula P-S(P'-S)ₙ-P, where P is a phenyl group, P' is a phenylene group, S is sulfur, and n is an integer having a value of from 0 to 5. In further aspects, example polyphenyl ether molecules may be represented by the formula P-X(P'-Y)ₙ-P, where P is a phenyl group, P' is a phenylene group, X and Y may independently be chosen from sulfur and oxygen, and n is an integer having a value of from 0 to 5. In both polyphenyl thioether compositions and polyphenyl ether compositions, the aromatic rings may include all ortho linkages, all meta linkages, ortho and meta linkages, or a combination of ortho, meta, and para linkages.

In some embodiments, one or more of the phenyl or phenylene groups may be substituted with an aliphatic group or a halogen element, such as chlorine, bromine, or iodine. Aliphatic-substituted phenyl group(s) and aliphatic-substituted phenylene group(s) may include straight-chained, non-aromatic ring, or branched aliphatic moieties, and may include saturated or unsaturated structures such as alkanes (e.g., paraffins), alkenes (e.g., olefins), and alkynes (e.g., acetylenes).

A fluid composition may include a single polyphenyl thioether molecule or a mixture of polyphenyl thioether molecules. In some embodiments, a mixture of polyphenyl thioether molecules may form a eutectic composition. According to further embodiments, a lens fluid composition may include a mixture of polyphenyl thioether molecule(s) and polyphenyl ether(s). A lens fluid composition may be clear or tinted.

According to various embodiments, a liquid lens fluid composition may include a polyphenyl ether molecule having from 2 to 7 aromatic rings, where the rings include ortho substitutions, meta substitutions, ortho and meta substitutions, or a combination of ortho, meta, and para substitutions. The aromatic groups may be linked by thioether bonds. That is, the polyphenyl thioether molecules may contain all-sulfur linking of the phenyl and phenylene rings. Such polyphenyl thioether molecules may, in some examples, be characterized as consisting of sulfur linkages. In alternate embodiments, one or more sulfur linkages may be replaced by an oxygen linkage. Inter-ring linkages may include sulfur or oxygen.

The liquid lens fluid composition may be characterized by any of a variety of properties. Examples of ranges of the refractive index over the visible spectrum (e.g., at approximately 589 nm) of the liquid lens fluid include at least 1.4, at least 1.5, at least 1.7, and at least 1.8. In some examples, the liquid lens fluid may have a freezing point of less than approximately -10°C. In some examples, the liquid lens fluid may have and a viscosity less than approximately 1000 cP (centipoise) at room temperature.

Some reflective polarizers (e.g., some multilayer reflective polarizers), may change (e.g., shrink or expand) under some conditions. For example, some reflective polarizers may shrink due to aging. In addition, reflective polarizers may generate strain as they change in size and/or shape due to anisotropic thermal expansion. Thus, for example, a reflective polarizer may induce birefringence on a substrate lens due to strain. In order to reduce strain-induced birefringence, reflective polarizer 225 may be a reflective polarizer that resists shrinking (e.g., due to aging) and/or that causes less strain from shrinking and/or under anisotropic thermal expansion. For example, reflective polarizer 225 may be thin in order to reduce strain-induced birefringence. Examples of the thickness of reflective polarizer 225 include, without limitation, 100 micrometers or less, 50 micrometers or less, 30 micrometers or less, 20 micrometers or less, and 10 micrometers or less.

In some examples, a coating on a lens (e.g., reflective polarizer 225 on lens 210 and/or partial reflector 230 on lens 220) may introduce stress from that side of the lens. Accordingly, in some examples, liquid lens 205 may include one or more coatings on the opposite side of lens 210 and/or lens 220 in a manner that balances the induced stress (and thereby mitigates changes to one or more optical properties of the lens). Thus, for example, if reflective polarizer 225 is a coating on the air side of lens 210, another coating (not pictured) may be applied to the fluid side of lens 210. In one example, the additional coating may act as a barrier against fluid 215.

In some examples, lenses 210 and 220 may have a relatively wide diameter to, e.g., create a wide field-of-view (e.g., for a head-mounted display). For example, lenses 210 and 220 may each have a diameter of 20 millimeters or more, 25 millimeters or more, 30 millimeters or more, or 35 millimeters or more. In addition, in some examples, lenses 210 and 220 may be relatively thin (e.g., to minimize weight and/or space taken between eye box 250 and display 235). Examples of the thickness of each of lenses 210 and 220 include, without limitation, 2 millimeters or less, 1.5 millimeters or less, and 1 millimeter or less.

In some examples, one or more of the lenses described herein (including, e.g., lens 205) may be a varifocal lens.

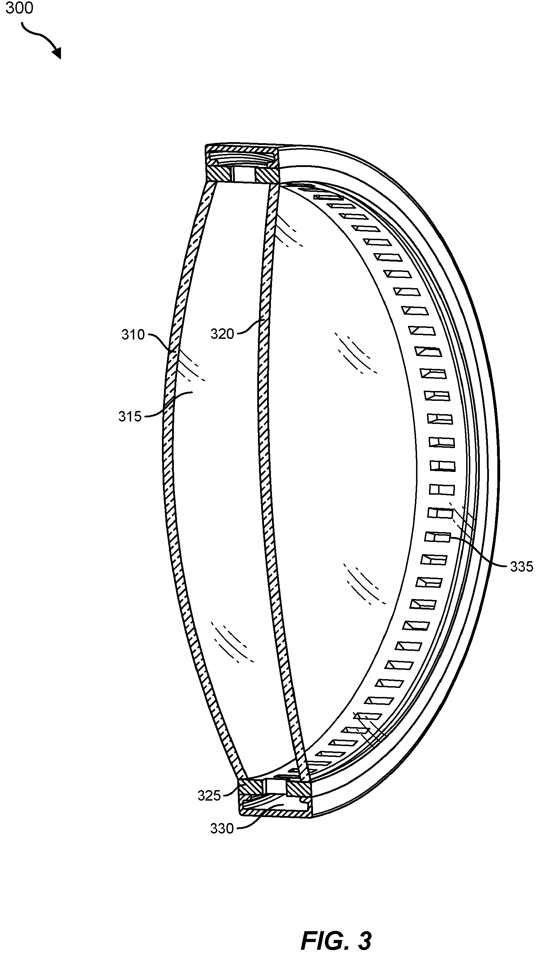

FIG. 3 is an illustration of a liquid lens 300 accommodating fluid expansion and/or contraction. As shown in FIG. 3, liquid lens 300 may include a lens 310, a lens 320, and a seal 325. A cavity defined by lens 310, lens 320, and seal 325 may be filled with a fluid 315. In addition, seal 325 may include one or more apertures 335 to a cavity 330. In some examples, aperture(s) 335 may be placed around the periphery of lenses 310 and 320. In other examples, aperture(s) 335 may be placed around only portions of the periphery of lenses 310 and 320. Likewise, in some examples, cavity 330 may extend around the periphery of lenses 310 and 320. In other examples, cavity 330 may extend around only one or more portions of the periphery of lenses 310 and 320. In some examples, at least a portion of cavity 330 may be defined at least in part by an elastic material (e.g., an elastomer). Examples of such an elastic material include, without limitation, neoprene, silicone, and polyurethane. In some examples, the size of cavity 330 and/or the elasticity of the elastic material may be selected to keep one or more optical properties of liquid lens 300 approximately stable as liquid lens 300 changes temperature. For example, the size of cavity 330 and/or the elasticity of the elastic material may be selected to keep the optical power of liquid lens 300 approximately constant.

In some examples, the coefficient of thermal expansion of fluid 315 may be greater than the coefficient of thermal expansion of lenses 310 and 320. Accordingly, changing temperature of liquid lens 300 may cause fluid 315 to expand or contract. Fluid 315 may expand through aperture(s) 335 and into cavity 330. Cavity 330 may allow fluid 315 to expand rather than exerting additional pressure on lenses 310 and 320, and may thereby avoid additional stress on lenses 310 and 320. Because stress may induce birefringence in lenses 310 and 320, aperture(s) 335 and cavity 330 may reduce and/or prevent birefringence in lenses 310 and 320.

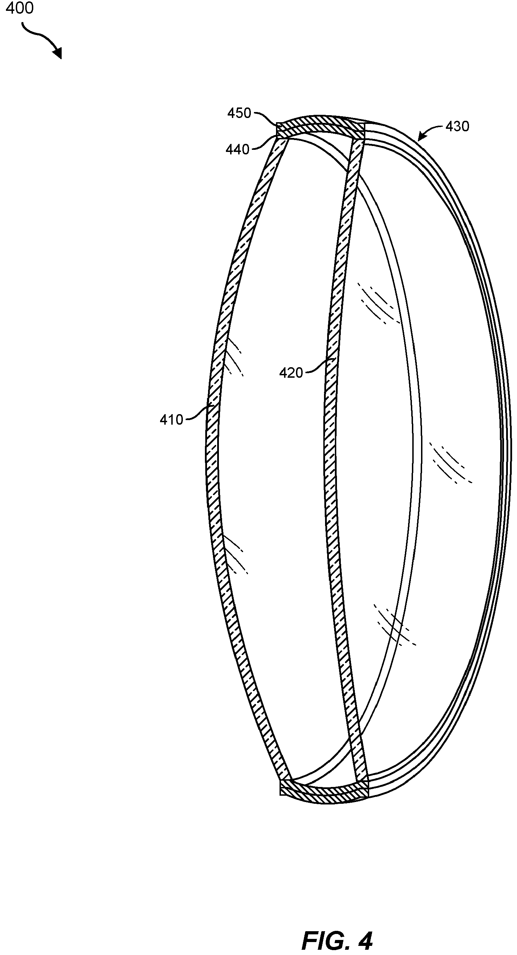

FIG. 4 is an illustration of a liquid lens 400 with a bilayered seal 430 with an outward curvature. As shown in FIG. 4, liquid lens 400 may include a lens 410 and a lens 420. Bilayered seal 430 may include a layer 440 and a layer 450. While liquid lens 400 is depicted with a bilayered seal, in some examples seal 430 may include three or more layers.

Layers 440 and 450 may have any suitable material composition. Examples of materials that may be included in layers 440 and 450 include, without limitation, metals, ceramics, polymers, composites (including fiber-based composites), and combinations thereof. In some examples, layers 440 and 450 may have differing coefficients of thermal expansion (e.g., may have material compositions with differing coefficients of thermal expansion). For example, layer 440 may have a greater coefficient of thermal expansion than layer 450. In one example, layer 440 may be composed of aluminum and layer 450 may be composed of steel.

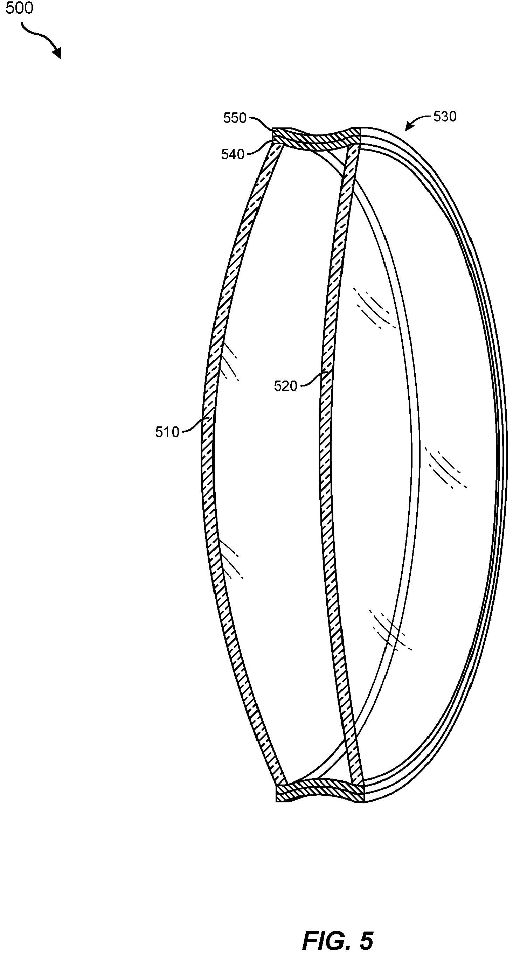

FIG. 5 is an illustration of a liquid lens 500 with a bilayered seal with an inward curvature. As shown in FIG. 5, liquid lens 500 may include a lens 510 and a lens 520. Bilayered seal 530 may include a layer 540 and a layer 550. While liquid lens 500 is depicted with a bilayered seal, in some examples seal 530 may include three or more layers.

Layers 540 and 550 may have any suitable material composition, including, e.g., the example materials discussed in relation to layers 440 and 450 of FIG. 4.

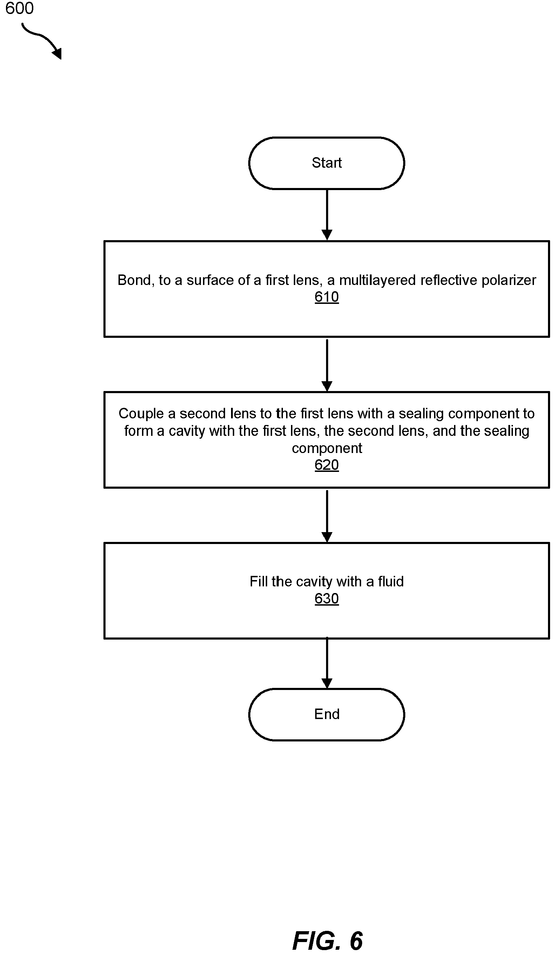

FIG. 6 is a flow diagram of an example method 600 of manufacturing a liquid lens. As shown in FIG. 6, at step 610 method 600 may include bonding, to a surface of a first lens, a multilayered reflective polarizer. At step 620, method 600 may include coupling a second lens to the first lens with a sealing component to form a cavity with the first lens, the second lens, and the sealing component. At step 630, method 600 may include filling the cavity with a fluid. As may be appreciated, the sealing component may include any of a variety of sealing components, including seal 325 of FIG. 3, seal 430 of FIG. 4, and seal 530 of FIG. 5.

Embodiments of the present disclosure may include or be implemented in conjunction with various types of artificial-reality systems. Artificial reality is a form of reality that has been adjusted in some manner before presentation to a user, which may include, for example, a virtual reality, an augmented reality, a mixed reality, a hybrid reality, or some combination and/or derivative thereof. Artificial-reality content may include completely computer-generated content or computer-generated content combined with captured (e.g., real-world) content. The artificial-reality content may include video, audio, haptic feedback, or some combination thereof, any of which may be presented in a single channel or in multiple channels (such as stereo video that produces a three-dimensional (3D) effect to the viewer). Additionally, in some embodiments, artificial reality may also be associated with applications, products, accessories, services, or some combination thereof, that are used to, for example, create content in an artificial reality and/or are otherwise used in (e.g., to perform activities in) an artificial reality.

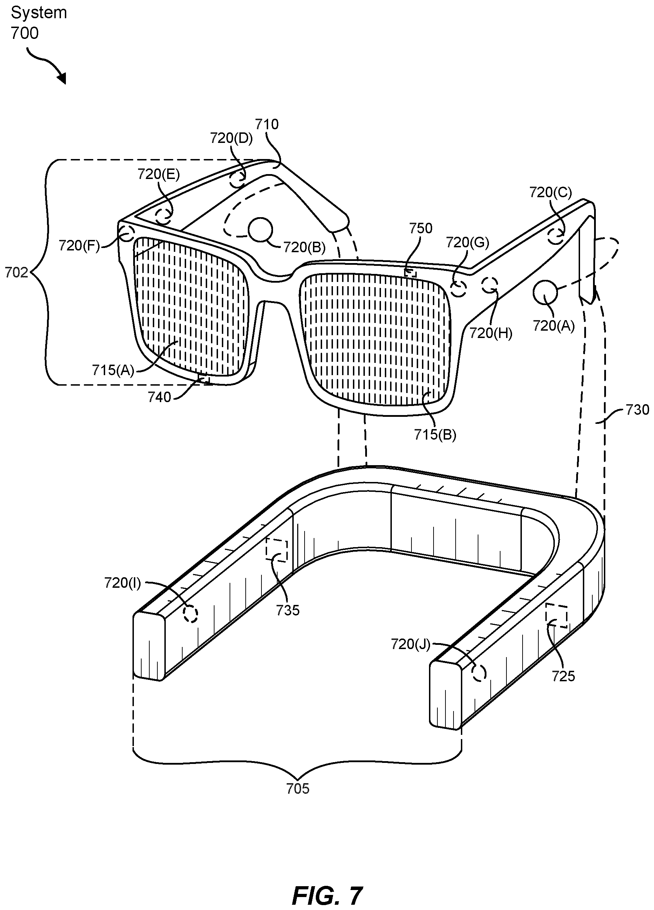

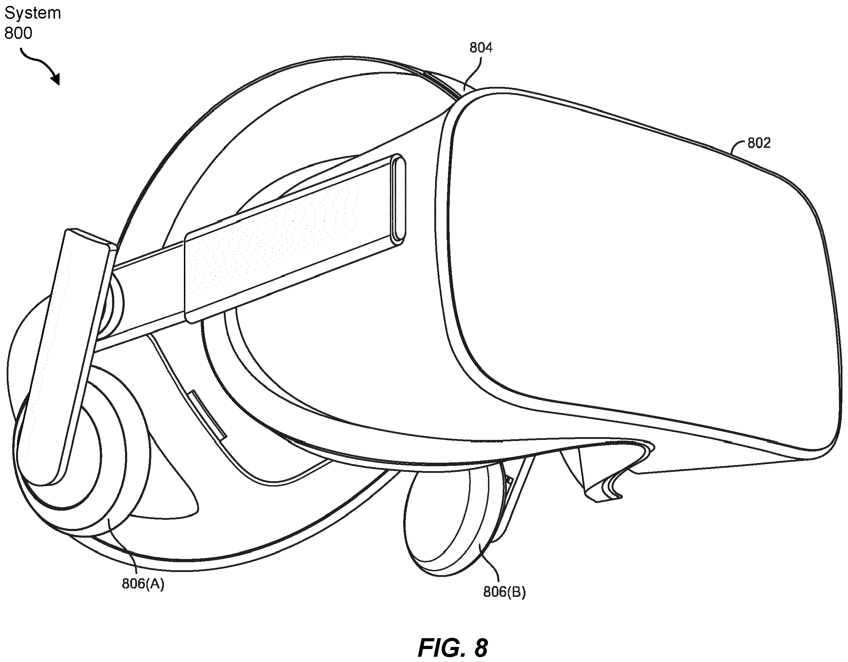

Artificial-reality systems may be implemented in a variety of different form factors and configurations. Some artificial-reality systems may be designed to work without near-eye displays (NEDs). Other artificial-reality systems may include an NED that also provides visibility into the real world (such as, e.g., augmented-reality system 700 in FIG. 7) or that visually immerses a user in an artificial reality (such as, e.g., virtual-reality system 800 in FIG. 8). While some artificial-reality devices may be self-contained systems, other artificial-reality devices may communicate and/or coordinate with external devices to provide an artificial-reality experience to a user. Examples of such external devices include handheld controllers, mobile devices, desktop computers, devices worn by a user, devices worn by one or more other users, and/or any other suitable external system.

Turning to FIG. 7, augmented-reality system 700 may include an eyewear device 702 with a frame 710 configured to hold a left display device 715(A) and a right display device 715(B) in front of a user's eyes. Display devices 715(A) and 715(B) may act together or independently to present an image or series of images to a user. While augmented-reality system 700 includes two displays, embodiments of this disclosure may be implemented in augmented-reality systems with a single NED or more than two NEDs.

In some embodiments, augmented-reality system 700 may include one or more sensors, such as sensor 740. Sensor 740 may generate measurement signals in response to motion of augmented-reality system 700 and may be located on substantially any portion of frame 710. Sensor 740 may represent one or more of a variety of different sensing mechanisms, such as a position sensor, an inertial measurement unit (IMU), a depth camera assembly, a structured light emitter and/or detector, or any combination thereof. In some embodiments, augmented-reality system 700 may or may not include sensor 740 or may include more than one sensor. In embodiments in which sensor 740 includes an IMU, the IMU may generate calibration data based on measurement signals from sensor 740. Examples of sensor 740 may include, without limitation, accelerometers, gyroscopes, magnetometers, other suitable types of sensors that detect motion, sensors used for error correction of the IMU, or some combination thereof.

In some examples, augmented-reality system 700 may also include a microphone array with a plurality of acoustic transducers 720(A)-720(J), referred to collectively as acoustic transducers 720. Acoustic transducers 720 may represent transducers that detect air pressure variations induced by sound waves. Each acoustic transducer 720 may be configured to detect sound and convert the detected sound into an electronic format (e.g., an analog or digital format). The microphone array in FIG. 7 may include, for example, ten acoustic transducers: 720(A) and 720(B), which may be designed to be placed inside a corresponding ear of the user, acoustic transducers 720(C), 720(D), 720(E), 720(F), 720(G), and 720(H), which may be positioned at various locations on frame 710, and/or acoustic transducers 720(I) and 720(J), which may be positioned on a corresponding neckband 705.

In some embodiments, one or more of acoustic transducers 720(A)-(J) may be used as output transducers (e.g., speakers). For example, acoustic transducers 720(A) and/or 720(B) may be earbuds or any other suitable type of headphone or speaker.

The configuration of acoustic transducers 720 of the microphone array may vary. While augmented-reality system 700 is shown in FIG. 7 as having ten acoustic transducers 720, the number of acoustic transducers 720 may be greater or less than ten. In some embodiments, using higher numbers of acoustic transducers 720 may increase the amount of audio information collected and/or the sensitivity and accuracy of the audio information. In contrast, using a lower number of acoustic transducers 720 may decrease the computing power required by an associated controller 750 to process the collected audio information. In addition, the position of each acoustic transducer 720 of the microphone array may vary. For example, the position of an acoustic transducer 720 may include a defined position on the user, a defined coordinate on frame 710, an orientation associated with each acoustic transducer 720, or some combination thereof.

Acoustic transducers 720(A) and 720(B) may be positioned on different parts of the user's ear, such as behind the pinna, behind the tragus, and/or within the auricle or fossa. Or, there may be additional acoustic transducers 720 on or surrounding the ear in addition to acoustic transducers 720 inside the ear canal. Having an acoustic transducer 720 positioned next to an ear canal of a user may enable the microphone array to collect information on how sounds arrive at the ear canal. By positioning at least two of acoustic transducers 720 on either side of a user's head (e.g., as binaural microphones), augmented-reality device 700 may simulate binaural hearing and capture a 3D stereo sound field around about a user's head. In some embodiments, acoustic transducers 720(A) and 720(B) may be connected to augmented-reality system 700 via a wired connection 730, and in other embodiments acoustic transducers 720(A) and 720(B) may be connected to augmented-reality system 700 via a wireless connection (e.g., a BLUETOOTH connection). In still other embodiments, acoustic transducers 720(A) and 720(B) may not be used at all in conjunction with augmented-reality system 700.

Acoustic transducers 720 on frame 710 may be positioned in a variety of different ways, including along the length of the temples, across the bridge, above or below display devices 715(A) and 715(B), or some combination thereof. Acoustic transducers 720 may also be oriented such that the microphone array is able to detect sounds in a wide range of directions surrounding the user wearing the augmented-reality system 700. In some embodiments, an optimization process may be performed during manufacturing of augmented-reality system 700 to determine relative positioning of each acoustic transducer 720 in the microphone array.

In some examples, augmented-reality system 700 may include or be connected to an external device (e.g., a paired device), such as neckband 705. Neckband 705 generally represents any type or form of paired device. Thus, the following discussion of neckband 705 may also apply to various other paired devices, such as charging cases, smart watches, smart phones, wrist bands, other wearable devices, hand-held controllers, tablet computers, laptop computers, other external compute devices, etc.

As shown, neckband 705 may be coupled to eyewear device 702 via one or more connectors. The connectors may be wired or wireless and may include electrical and/or non-electrical (e.g., structural) components. In some cases, eyewear device 702 and neckband 705 may operate independently without any wired or wireless connection between them. While FIG. 7 illustrates the components of eyewear device 702 and neckband 705 in example locations on eyewear device 702 and neckband 705, the components may be located elsewhere and/or distributed differently on eyewear device 702 and/or neckband 705. In some embodiments, the components of eyewear device 702 and neckband 705 may be located on one or more additional peripheral devices paired with eyewear device 702, neckband 705, or some combination thereof.

Pairing external devices, such as neckband 705, with augmented-reality eyewear devices may enable the eyewear devices to achieve the form factor of a pair of glasses while still providing sufficient battery and computation power for expanded capabilities. Some or all of the battery power, computational resources, and/or additional features of augmented-reality system 700 may be provided by a paired device or shared between a paired device and an eyewear device, thus reducing the weight, heat profile, and form factor of the eyewear device overall while still retaining desired functionality. For example, neckband 705 may allow components that would otherwise be included on an eyewear device to be included in neckband 705 since users may tolerate a heavier weight load on their shoulders than they would tolerate on their heads. Neckband 705 may also have a larger surface area over which to diffuse and disperse heat to the ambient environment. Thus, neckband 705 may allow for greater battery and computation capacity than might otherwise have been possible on a stand-alone eyewear device. Since weight carried in neckband 705 may be less invasive to a user than weight carried in eyewear device 702, a user may tolerate wearing a lighter eyewear device and carrying or wearing the paired device for greater lengths of time than a user would tolerate wearing a heavy standalone eyewear device, thereby enabling users to more fully incorporate artificial-reality environments into their day-to-day activities.

Neckband 705 may be communicatively coupled with eyewear device 702 and/or to other devices. These other devices may provide certain functions (e.g., tracking, localizing, depth mapping, processing, storage, etc.) to augmented-reality system 700. In the embodiment of FIG. 7, neckband 705 may include two acoustic transducers (e.g., 720(I) and 720(J)) that are part of the microphone array (or potentially form their own microphone subarray). Neckband 705 may also include a controller 725 and a power source 735.

Acoustic transducers 720(I) and 720(J) of neckband 705 may be configured to detect sound and convert the detected sound into an electronic format (analog or digital). In the embodiment of FIG. 7, acoustic transducers 720(I) and 720(J) may be positioned on neckband 705, thereby increasing the distance between the neckband acoustic transducers 720(I) and 720(J) and other acoustic transducers 720 positioned on eyewear device 702. In some cases, increasing the distance between acoustic transducers 720 of the microphone array may improve the accuracy of beamforming performed via the microphone array. For example, if a sound is detected by acoustic transducers 720(C) and 720(D) and the distance between acoustic transducers 720(C) and 720(D) is greater than, e.g., the distance between acoustic transducers 720(D) and 720(E), the determined source location of the detected sound may be more accurate than if the sound had been detected by acoustic transducers 720(D) and 720(E).

Controller 725 of neckband 705 may process information generated by the sensors on neckband 705 and/or augmented-reality system 700. For example, controller 725 may process information from the microphone array that describes sounds detected by the microphone array. For each detected sound, controller 725 may perform a direction-of-arrival (DOA) estimation to estimate a direction from which the detected sound arrived at the microphone array. As the microphone array detects sounds, controller 725 may populate an audio data set with the information. In embodiments in which augmented-reality system 700 includes an inertial measurement unit, controller 725 may compute all inertial and spatial calculations from the IMU located on eyewear device 702. A connector may convey information between augmented-reality system 700 and neckband 705 and between augmented-reality system 700 and controller 725. The information may be in the form of optical data, electrical data, wireless data, or any other transmittable data form. Moving the processing of information generated by augmented-reality system 700 to neckband 705 may reduce weight and heat in eyewear device 702, making it more comfortable to the user.

Power source 735 in neckband 705 may provide power to eyewear device 702 and/or to neckband 705. Power source 735 may include, without limitation, lithium ion batteries, lithium-polymer batteries, primary lithium batteries, alkaline batteries, or any other form of power storage. In some cases, power source 735 may be a wired power source. Including power source 735 on neckband 705 instead of on eyewear device 702 may help better distribute the weight and heat generated by power source 735.

As noted, some artificial-reality systems may, instead of blending an artificial reality with actual reality, substantially replace one or more of a user's sensory perceptions of the real world with a virtual experience. One example of this type of system is a head-worn display system, such as virtual-reality system 800 in FIG. 8, that mostly or completely covers a user's field of view. Virtual-reality system 800 may include a front rigid body 802 and a band 804 shaped to fit around a user's head. Virtual-reality system 800 may also include output audio transducers 806(A) and 806(B). Furthermore, while not shown in FIG. 8, front rigid body 802 may include one or more electronic elements, including one or more electronic displays, one or more inertial measurement units (IMUs), one or more tracking emitters or detectors, and/or any other suitable device or system for creating an artificial-reality experience.

Artificial-reality systems may include a variety of types of visual feedback mechanisms. For example, display devices in augmented-reality system 700 and/or virtual-reality system 800 may include one or more liquid crystal displays (LCDs), light emitting diode (LED) displays, microLED displays, organic LED (OLED) displays, digital light project (DLP) micro-displays, liquid crystal on silicon (LCoS) micro-displays, and/or any other suitable type of display screen. These artificial-reality systems may include a single display screen for both eyes or may provide a display screen for each eye, which may allow for additional flexibility for varifocal adjustments or for correcting a user's refractive error. Some of these artificial-reality systems may also include optical subsystems having one or more lenses (e.g., concave or convex lenses, Fresnel lenses, adjustable liquid lenses, etc.) through which a user may view a display screen. These optical subsystems may serve a variety of purposes, including to collimate (e.g., make an object appear at a greater distance than its physical distance), to magnify (e.g., make an object appear larger than its actual size), and/or to relay (to, e.g., the viewer's eyes) light. These optical subsystems may be used in a non-pupil-forming architecture (such as a single lens configuration that directly collimates light but results in so-called pincushion distortion) and/or a pupil-forming architecture (such as a multi-lens configuration that produces so-called barrel distortion to nullify pincushion distortion).

In addition to or instead of using display screens, some of the artificial-reality systems described herein may include one or more projection systems. For example, display devices in augmented-reality system 700 and/or virtual-reality system 800 may include micro-LED projectors that project light (using, e.g., a waveguide) into display devices, such as clear combiner lenses that allow ambient light to pass through. The display devices may refract the projected light toward a user's pupil and may enable a user to simultaneously view both artificial-reality content and the real world. The display devices may accomplish this using any of a variety of different optical components, including waveguide components (e.g., holographic, planar, diffractive, polarized, and/or reflective waveguide elements), light-manipulation surfaces and elements (such as diffractive, reflective, and refractive elements and gratings), coupling elements, etc. Artificial-reality systems may also be configured with any other suitable type or form of image projection system, such as retinal projectors used in virtual retina displays.

The artificial-reality systems described herein may also include various types of computer vision components and subsystems. For example, augmented-reality system 700 and/or virtual-reality system 800 may include one or more optical sensors, such as two-dimensional (2D) or 3D cameras, structured light transmitters and detectors, time-of-flight depth sensors, single-beam or sweeping laser rangefinders, 3D LiDAR sensors, and/or any other suitable type or form of optical sensor. An artificial-reality system may process data from one or more of these sensors to identify a location of a user, to map the real world, to provide a user with context about real-world surroundings, and/or to perform a variety of other functions.

The artificial-reality systems described herein may also include one or more input and/or output audio transducers. Output audio transducers may include voice coil speakers, ribbon speakers, electrostatic speakers, piezoelectric speakers, bone conduction transducers, cartilage conduction transducers, tragus-vibration transducers, and/or any other suitable type or form of audio transducer. Similarly, input audio transducers may include condenser microphones, dynamic microphones, ribbon microphones, and/or any other type or form of input transducer. In some embodiments, a single transducer may be used for both audio input and audio output.

In some embodiments, the artificial-reality systems described herein may also include tactile (i.e., haptic) feedback systems, which may be incorporated into headwear, gloves, body suits, handheld controllers, environmental devices (e.g., chairs, floormats, etc.), and/or any other type of device or system. Haptic feedback systems may provide various types of cutaneous feedback, including vibration, force, traction, texture, and/or temperature. Haptic feedback systems may also provide various types of kinesthetic feedback, such as motion and compliance. Haptic feedback may be implemented using motors, piezoelectric actuators, fluidic systems, and/or a variety of other types of feedback mechanisms. Haptic feedback systems may be implemented independent of other artificial-reality devices, within other artificial-reality devices, and/or in conjunction with other artificial-reality devices.

By providing haptic sensations, audible content, and/or visual content, artificial-reality systems may create an entire virtual experience or enhance a user's real-world experience in a variety of contexts and environments. For instance, artificial-reality systems may assist or extend a user's perception, memory, or cognition within a particular environment. Some systems may enhance a user's interactions with other people in the real world or may enable more immersive interactions with other people in a virtual world. Artificial-reality systems may also be used for educational purposes (e.g., for teaching or training in schools, hospitals, government organizations, military organizations, business enterprises, etc.), entertainment purposes (e.g., for playing video games, listening to music, watching video content, etc.), and/or for accessibility purposes (e.g., as hearing aids, visual aids, etc.). The embodiments disclosed herein may enable or enhance a user's artificial-reality experience in one or more of these contexts and environments and/or in other contexts and environments.

The process parameters and sequence of the steps described and/or illustrated herein are given by way of example only and can be varied as desired. For example, while the steps illustrated and/or described herein may be shown or discussed in a particular order, these steps do not necessarily need to be performed in the order illustrated or discussed. The various exemplary methods described and/or illustrated herein may also omit one or more of the steps described or illustrated herein or include additional steps in addition to those disclosed.

The preceding description has been provided to enable others skilled in the art to best utilize various aspects of the exemplary embodiments disclosed herein. This exemplary description is not intended to be exhaustive or to be limited to any precise form disclosed. Many modifications and variations are possible without departing from the spirit and scope of the present disclosure. The embodiments disclosed herein should be considered in all respects illustrative and not restrictive. Reference should be made to the appended claims and their equivalents in determining the scope of the present disclosure.

Unless otherwise noted, the terms "connected to" and "coupled to" (and their derivatives), as used in the specification and claims, are to be construed as permitting both direct and indirect (i.e., via other elements or components) connection. In addition, the terms "a" or "an," as used in the specification and claims, are to be construed as meaning "at least one of." Finally, for ease of use, the terms "including" and "having" (and their derivatives), as used in the specification and claims, are interchangeable with and have the same meaning as the word "comprising."

## Claims

1. An apparatus comprising:
a first rigid lens;
a second rigid lens;
a seal that couples the first rigid lens and the second rigid lens together, wherein the first rigid lens, the second rigid lens, and the seal define a cavity; and
a fluid within the cavity, wherein the seal is adapted to admit expansion of the fluid within the cavity.

2. The apparatus of claim 1, wherein the seal comprises a same material of at least one of:
the first rigid lens; or
the second rigid lens.

3. The apparatus of claim 1 or 2, wherein the seal has a higher coefficient of thermal expansion than at least one of:
the first rigid lens; or
the second rigid lens.

4. The apparatus of any preceding claim, wherein the seal comprises an elastic material.

5. The apparatus of any preceding claim, further comprising a reservoir, wherein the seal is adapted to allow fluid to pass through at least a portion of the seal to the reservoir.

6. The apparatus of any preceding claim, wherein the seal comprises two layers; preferably wherein the two layers differ from each other in material composition.

7. The apparatus of claim 6, wherein the seal curves away from a common plane defined by the first lens and the second lens.

8. The apparatus of claim 6, wherein the seal curves inward toward a common plane defined by the first lens and the second lens.

9. The apparatus of any preceding claim, further comprising:
a reflective polarizer; and
a partial reflector.

10. The apparatus of claim 9, wherein the reflective polarizer is adjacent to at least one of the first lens and the second lens;
preferably wherein the reflective polarizer is between the first lens and the fluid.

11. The apparatus of claim 9 or 10, wherein the partial reflector is adjacent to at least one of the first lens and the second lens;
preferably wherein the partial reflector is between the second lens and the fluid.

12. The apparatus of any of claims 9 to 11, wherein the first lens:
has a diameter of greater than about 25 millimeters; and
has an average thickness of less than about 2 millimeters.

13. The apparatus of any of claims 9 to 12, wherein the reflective polarizer comprises a multilayer reflective polarizer;
preferably wherein the reflective polarizer has a thickness of less than about 50 microns.

14. An apparatus comprising:
a pancake lens with a folded optical path;
wherein the pancake lens maintains a contrast ratio of at least 200:1, preferably at least 500:1, when undergoing a temperature change of about 70 degrees centigrade over about 5 minutes.

15. A method of manufacture comprising:
bonding, to a surface of a first lens, a multilayered reflective polarizer;
coupling a second lens to the first lens with a sealing component to form a cavity with the first lens, the second lens, and the sealing component; and
filling the cavity with a fluid.
